# EUROPÄISCHE PATENTANMELDUNG

(11) **EP 1 808 079 A1**
(43) Veröffentlichungstag der Anmeldung: **18.07.2007**
(21) Anmeldenummer: 05027309.3
(22) Anmeldetag: 14.12.2005
(51) Int. Cl.: A23G 3/50, A23G 3/00

(54) **Süssware zum Bemalen**

(71) Anmelder: Mederer GmbH, 90763 Fürth (DE)
(72) Erfinder: Mederer, Herbert, 90768 Fürth (DE)
(74) Vertreter: Rau, Albrecht

(57) **Zusammenfassung**

Süßware zum Bemalen mit Lebensmittelfarbe mit mindestens einer zu bemalenden Fläche (2) und mindestens einem, die mindestens eine Fläche (2) zumindest teilweise umgebenden, gegenüber der mindestens eine Fläche (2) nach außen vorstehenden Rand (3).

## Beschreibung

Die Erfindung betrifft eine Süßware zum Bemalen mit Lebensmittelfarbe sowie ein Set bestehend aus der Süßware sowie einem Lebensmittelfarbstift.

Süßwaren aus Fruchtgummi und/oder Schaumzucker sind häufig farblich gestaltet, um für den Konsumenten, vor allem Kinder, anziehender zu sein. Die Farbgestaltung ist vom Hersteller vorgegeben. Insofern ist mit der Farbgestaltung kein isolierter Spielwert verbunden.

Der Erfindung liegt die Aufgabe zugrunde, den Spielwert von Süßwaren zu erhöhen.

Die Aufgabe wird durch die Merkmale des Anspruches 1 gelöst. Der Kern der Erfindung besteht darin, eine Süßware zum Bemalen mit Lebensmittelfarbe so auszugestalten, dass die zu bemalenden Flächen von nach außen vorspringenden Rändern umgeben sind, sodass das Bemalen der Flächen vereinfacht wird.

Weitere vorteilhafte Ausgestaltungen ergeben sich aus den Unteransprüchen.

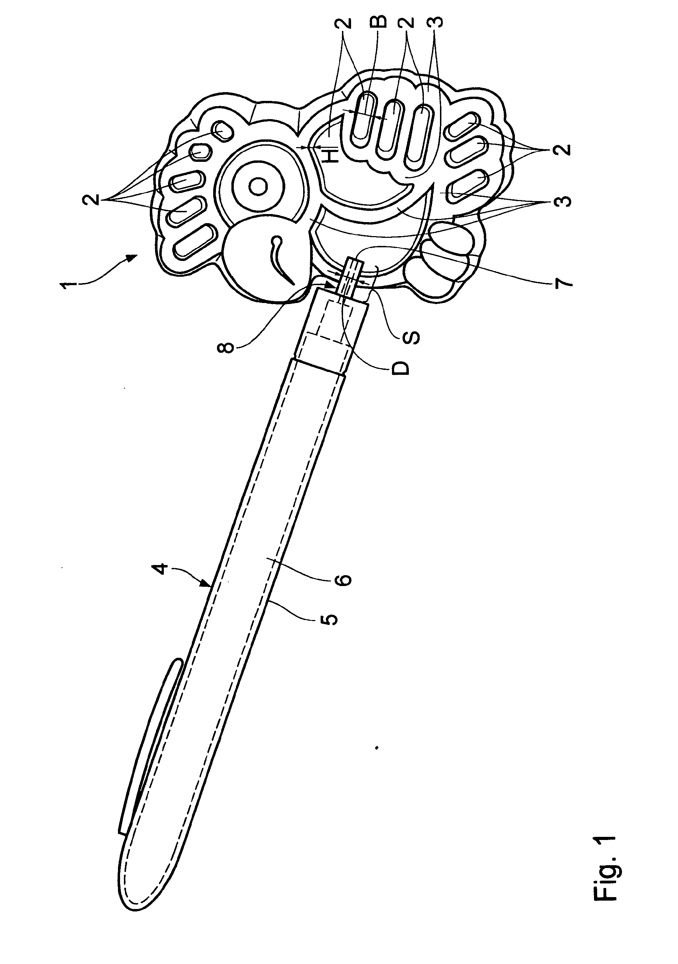

Zusätzliche Merkmale und Einzelheiten der Erfindung ergeben sich aus der Beschreibung eines Ausführungsbeispiels anhand der Zeichnung. Es zeigt
- Fig. 1: eine zu bemalende Süßware mit einem Stift.

Eine Süßware 1 zum Bemalen mit Lebensmittelfarbe besteht aus Fruchtgummi und/oder Schaumzucker und/oder Lakritze. Es können auch andere zur Herstellung von Süßwaren geeignete Herstellungsstoffe verwendet werden. Die Süßware weist mindestens eine, insbesondere mehrere zu bemalende Flächen 2 auf. Die Flächen 2 können die Struktur eines Bildes, beispielsweise eines Tieres - wie in Fig. 1 eines Papageis -, wiedergeben. Die Süßware 1 kann, wie im Fall von Fig. 1, eher flach ausgebildet sein, das heißt die Erstreckung in der Fläche ist größer als die in der Dicke. Derartige flächige Süßwaren 1 können nur auf der Vorderseite oder auch auf der Rückseite zu bemalende Flächen 2 besitzen. Es ist auch möglich, Süßwaren 1 vorzusehen, die voll dreidimensional ausgebildet sind und beispielsweise die Form von Objekten, wie z. B. Tieren, dreidimensional nachbilden.

Die zu bemalenden Flächen 2 sind von nach außen, das heißt in Richtung des Betrachters, vorstehenden Rändern, insbesondere in der Form von Stegen, umgeben, die die Flächen 2 begrenzen. Das heißt, die zu bemalenden Flächen 2 springen gegenüber den Rändern 3 zurück und werden durch die Ränder 3 umfangsseitig begrenzt. Die Flächen 2 sowie die Ränder 3 prägen zusammen das optische Erscheinungsbild der Süßware 1, im Fall von Fig. 1 das Bild eines Papageis.

Bei einer, wie in Fig. 1 dargestellten, flachen Süßware 1 sind auch die zu bemalenden Flächen 2 primär planar oder zumindest nur schwach gekrümmt ausgebildet. Die Ränder bzw. Stege 3 springen von den Flächen 2 senkrecht hervor. Der Höhenunterschied H zwischen den Flächen 2 und der Oberseite der Ränder 3 ist so gewählt, dass einerseits eine klare Begrenzung der Fläche 2 erfolgt, die Stege 3 aber noch in sich stabil sind. Typische Höhenunterschiede H liegen zwischen 1 und 5 mm. Die Süßware 1 ist im so genannten Negativ-Guss hergestellt. Dies bedeutet, dass, wie in Fig. 1 dargestellt, die wesentlichen Flächen 2 der Süßware 1 zurückspringend ausgebildet sind und die sie trennenden Ränder bzw. Stege 3 nach außen vorspringen.

Ein Set bzw. Kit zum Bemalen der Süßware 1 umfasst einen Stift 4 bestehend aus einem im Wesentlichen zylindrischen, hohlen, an einem Ende verschlossenen Grundkörper 5, der einen Tank 6 mit Lebensmittelfarbe aufnimmt. Der Stift 4 weist an einem Ende eine nach außen vorstehende Spitze 8 in Form eines Austrittsrohres auf, in der eine Austritts-Öffnung 7 für die Lebensmittelfarbe vorgesehen ist. Die Spitze 8 weist eine Länge S sowie einen Außendurchmesser D auf. Es ist auch möglich, wie bei anderen Schreibinstrumenten, anstelle des Austrittsrohres eine Kugel, wie bei einem Kugelschreiber, eine Filzspitze, wie bei einem Filzstift, oder eine Feder, wie bei einem Füller, vorzusehen. Durch das Austrittsrohr kann die Lebensmittelfarbe im Tank 6 kontrolliert abgegeben werden.

Mit dem Stift 4 können die zu bemalenden Flächen 2 bemalt werden. Dadurch, dass die Flächen 2 mit nach außen vorstehenden Rändern 3 umgeben sind, ist das Bemalen derselben für Kinder besonders einfach, da der Stift 4 durch die Ränder 3 geführt wird. Die Ränder 3 bilden gleichsam eine Malschablone. Der Außendurchmesser D der Spitze 8 ist kleiner gleich der minimalen Breite B der zu bemalenden Flächen 2, das heißt man erreicht mit dem Stift 4 alle zu bemalenden Flächen 2. Darüber hinaus ist die Länge S der Spitze 8 größer als der Höhenunterschied H, sodass der Grundkörper 5 beim Bemalen nicht auf dem Rand 3 aufsetzt. Es können verschiedenfarbige Stifte 4 verwendet werden, um die Süßware 1 bunt zu bemalen. Nach dem Abschluss des Bemalens kann die mit Lebensmittelfarbe bemalte Süßware 1 gegessen werden.

## Patentansprüche

1. Süßware zum Bemalen mit Lebensmittelfarbe mit
a) mindestens einer zu bemalenden Fläche (2) und
b) mindestens einem, die mindestens eine Fläche (2) zumindest teilweise umgebenden, gegenüber der mindestens einen Fläche (2) nach außen vorstehenden Rand (3).

2. Süßware gemäß Anspruch 1, **dadurch gekennzeichnet, dass** die Ränder (3) die Form von Stegen besitzen.

3. Süßware gemäß Anspruch 1 oder 2, **dadurch gekennzeichnet, dass** die Ränder (3) gegenüber den Flächen (2) im Wesentlichen senkrecht vorspringen.

4. Süßware gemäß einem der vorangehenden Ansprüche, **dadurch gekennzeichnet, dass** der Höhenunterschied H zwischen den Rändern (3) und den Flächen (2) so groß ist, dass dieser als Anschlag für einen Stift (4) dienen kann.

5. Süßware gemäß einem der vorangehenden Ansprüche, **dadurch gekennzeichnet, dass** die Flächen (2) und sie umgebenden Ränder (3) das optische Erscheinungsbild der Süßware bestimmen.

6. Süßware gemäß einem der vorangehenden Ansprüche, **dadurch gekennzeichnet, dass** diese aus Fruchtgummi und/oder Schaumzucker und/oder Lakritze besteht.

7. Set zum Spielen umfassend
a) eine Süßware (1) gemäß einem der vorangehenden Ansprüche und
b) einen Stift (4) mit Lebensmittelfarbe zum Bemalen der Flächen (2).

8. Set gemäß Anspruch 7, **dadurch gekennzeichnet, dass** der Stift (4) eine Spitze (8) aufweist, deren Außendurchmesser D auf die Größe der zu bemalenden Flächen (2) abgestimmt ist.

9. Set gemäß Anspruch 7 oder 8, **dadurch gekennzeichnet, dass** der Stift (4) eine Spitze (8) der Länge S aufweist und die Ränder (3) gegenüber den Flächen (2) um einen Höhenunterschied H vorstehen, wobei gilt: S≥H.

10. Set gemäß Anspruch 9, **dadurch gekennzeichnet, dass** die Spitze (8) einen Außendurchmesser D aufweist, der kleiner gleich der minimalen Breite B der Flächen (2) ist.
